(19) Europäisches Patentamt
European Patent Office
Office européen des brevets

(11) EP 2 865 728 B1

(12) # FASCICULE DE BREVET EUROPEEN

(45) Date de publication et mention de la délivrance du brevet:
**17.08.2016 Bulletin 2016/33**

(21) Numéro de dépôt: **14189272.9**

(22) Date de dépôt: **16.10.2014**

(51) Int Cl.:
***C09J 193/04*** *(2006.01)* ***C08G 18/75*** *(2006.01)*
***C08G 18/10*** *(2006.01)* ***C08G 18/22*** *(2006.01)*
***C08G 65/336*** *(2006.01)* ***C08G 18/42*** *(2006.01)*
***C09J 175/04*** *(2006.01)* ***C09J 7/02*** *(2006.01)*

(54) **Autoadhésif d'origine renouvelable à pouvoir adhésif stable en température**

Selbstklebende Vorrichtung aus erneuerbaren Quellen mit temperaturbeständiger Klebekraft

Self-adhesive of renewable origin with temperature-stable adhesive power

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2013 FR 1360358**

(43) Date de publication de la demande:
**29.04.2015 Bulletin 2015/18**

(73) Titulaire: **BOSTIK SA**
**93210 La Plaine Saint Denis (FR)**

(72) Inventeurs:
- **Laferte, Olivier**
**60350 TROSLY BREUIL (FR)**
- **Fouquay, Stéphane**
**76130 MONT SAINT AIGNAN (FR)**

(74) Mandataire: **Granet, Pierre et al**
**Arkema France**
**420, rue d'Estienne d'Orves**
**92705 Colombes Cedex (FR)**

(56) Documents cités:
**EP-A1- 2 336 208** **WO-A2-2009/106699**
**DE-A1-102010 030 096**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 865 728 B1

## Description

La présente invention a pour objet une composition adhésive réticulable par chauffage comprenant des polymères à terminaison alkoxysilanes hydrolysables, qui peut être obtenue, au moins en partie, à partir de matières premières d'origine renouvelable. Cette composition permet, après enduction, l'obtention d'un support autoadhésif dont le pouvoir adhésif est maintenu dans un large domaine de température. L'invention concerne également ledit support autoadhésif, ainsi que son utilisation pour la fabrication d'étiquettes et/ou de rubans auto-adhésifs.

On connaît déjà, par les demandes WO 09/106699 et EP2336208 des compositions adhésives à base de polyuréthane (ou polyéther) à terminaison alkoxysilanes hydrolysables, dont l'enduction sur un support et le chauffage conduisent, au terme d'une réaction chimique de réticulation mise en oeuvre en présence d'humidité atmosphérique, à l'obtention d'un support auto-adhésif qui présente des propriétés avantageuses de pouvoir adhésif et de pouvoir collant immédiat (dénommé également « tack »). Du fait de ces propriétés, ledit support auto-adhésif peut être utilisé pour la fabrication d'étiquettes et/ou de rubans auto-adhésifs.

Le joint adhésif qui assure la fixation dudit support auto-adhésif sur un substrat est donc formé par cette réaction de réticulation. Il revêt, de ce fait, une structure de réseau polymérique tridimensionnel comprenant des liaisons siloxane et a également l'avantage de conserver le pouvoir adhésif requis dans un large domaine de température. Cela permet d'envisager l'utilisation dudit support auto-adhésif dans toutes les applications où un article revêtu de l'étiquette et/ou du ruban est exposé à des températures très variables, y compris très éloignées de la température ambiante. On peut citer à titre d'exemple la pose d'étiquettes sur certains organes des automobiles (ou autres véhicules) situés à proximité du moteur, ou sur des emballages conçus pour recevoir durant leur conditionnement un liquide chaud, ou encore sur des articles (tels les pneumatiques) qui sont étiquetés à chaud, au sortir des chaînes de fabrication. On peut également citer la mise en oeuvre de rubans auto-adhésifs pour l'assemblage de pièces pour lesquelles une bonne tenue thermique est nécessaire comme dans le cas, par exemple, de l'habillage intérieur des avions ou autres véhicules.

La composition divulguée par la demande WO 09/106699 comprend de 20 à 85 % d'un polyuréthane avec 2 groupes terminaux alkoxysilane hydrolysables dont le procédé d'obtention comprend la réaction d'un diisocyanate avec un polyéther diol, plus particulièrement un polyoxyalkylène diol, comme le polypropylène glycol.

Toutefois, les polyoxyalkylènes diols sont fabriqués par polymérisation d'oxydes d'alkylène, eux-mêmes obtenus uniquement à partir de matières premières d'origine non renouvelable, notamment à partir de l'éthylène et du propylène issus du vapocraquage du naphta ou du gaz naturel.

La composition divulguée par la demande EP2336208 qui comprend de 20 à 85 % d'un polyéther avec 2 groupes terminaux alkoxysilane hydrolysables, est également obtenue à partir d'un polyoxyalkylène diol et présente donc le même inconvénient que la composition divulguée par la demande WO 09/106699.

Or, dans le cadre actuel du développement d'une chimie "verte" permettant la fabrication de composition adhésive, on cherche de plus en plus à éviter le recours à des matières premières non renouvelables (d'origine pétrolière ou fossile), ou tout au moins à diminuer leur part pondérale dans ladite composition. On cherche ainsi à mettre en oeuvre, pour la fabrication de ladite composition, davantage de matières premières renouvelables, d'origine végétale ou animale.

L'invention a pour but de proposer des compositions adhésives réticulables à chaud qui offrent des propriétés similaires à celles des compositions connues de l'art antérieur, tout en remplaçant, au moins en partie, les polymères à terminaisons alkoxysilanes hydrolysables mis en oeuvre dans lesdites compositions, par des polymères à terminaisons alkoxysilanes hydrolysables qui peuvent être fabriqués à partir de matières premières renouvelables.

La présente invention a donc pour objet, en premier lieu, une composition adhésive réticulable par chauffage comprenant :

- (a) de 47 à 60 % poids/poids d'une composition (A) comprenant des polymères à terminaisons alkoxysilanes hydrolysables, ladite composition (A) étant constituée :

    - de 10 à 50 % poids/poids d'un polymère (A1) de formule (I) :

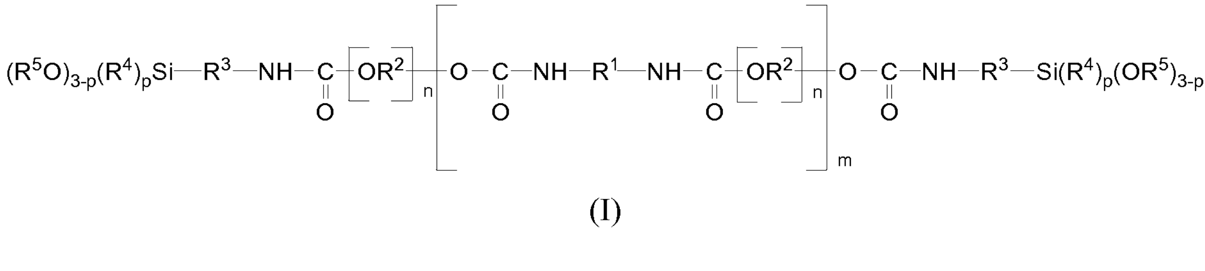

(I)

dans laquelle :

- $R^1$ représente un radical divalent hydrocarboné comprenant de 5 à 15 atomes de carbone qui peut être aromatique ou aliphatique, linéaire, ramifié ou cyclique;
- $R^2$ représente un radical divalent alkylène linéaire ou ramifié comprenant de 1 à 4 atomes de carbone ;
- $R^3$ représente un radical divalent alkylène linéaire comprenant de 1 à 3 atomes de carbone ;
- $R^4$ et $R^5$, identiques ou différents, représentent chacun un radical alkyle linéaire ou ramifié de 1 à 4 atomes de carbone, avec la possibilité lorsqu'il y a plusieurs radicaux $R^4$ (ou $R^5$) que ceux-ci soient identiques ou différents ;
- n est un nombre entier tel que la masse molaire moyenne en nombre du bloc polyéther de formule $-[OR^2]_n-$ est comprise entre 300 Da et 30 kDa ;
- m est ou bien égal à 0 ou bien un nombre entier non nul tel que la masse molaire moyenne en nombre du polymère de formule (I) est comprise entre 600 Da et 60 kDa ;
- p est un nombre entier égal à 0, 1 ou 2 ; et

- de 50 à 90 % poids/poids d'une composition (A2) comprenant au moins 85 % poids/poids de polyuréthanes à terminaisons alkoxysilanes hydrolysables de formule (II) :

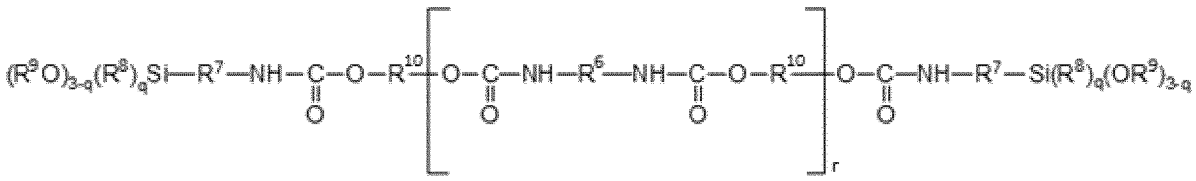

(II)

dans laquelle :

- $R^6$ représente un radical divalent hydrocarboné comprenant de 5 à 15 atomes de carbone qui peut être aromatique ou aliphatique, linéaire, ramifié ou cyclique;
- $R^7$ représente un radical divalent alkylène linéaire comprenant de 1 à 3 atomes de carbone ;
- $R^8$ et $R^9$, identiques ou différents, représentent chacun un radical alkyle linéaire ou ramifié de 1 à 4 atomes de carbone, avec la possibilité lorsqu'il y a plusieurs radicaux $R^8$ (ou $R^9$) que ceux-ci soient identiques ou différents ;
- q est un nombre entier égal à 0, 1 ou 2 ;
- r est un nombre tel que la masse molaire moyenne en nombre des polymères de formule (II) est comprise entre 900 Da et 11 kDa ;

- $R^{10}$ représente un bloc polyester divalent de formule (III) :

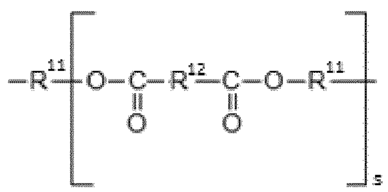

(III)

dans laquelle :

- $R^{11}$ représente un radical hydrocarboné divalent qui est dérivé d'un alcool gras dimérisé par remplacement de chacun des 2 groupes hydroxyle par une valence libre, ledit alcool ayant un indice d'hydroxyle $I_{OH}$ compris entre 200 et 220 mg KOH/g ;
- $R^{12}$ représente un radical hydrocarboné divalent qui est dérivé d'un acide gras dimérisé par remplacement

de chacun des 2 groupes carboxyles -COOH par une valence libre, ledit acide ayant un indice d'acide IA compris entre 190 et 200 mg KOH/g ;

- s est un nombre tel que le polyester diol de formule IV :

$$OH\text{-}R^{10}\text{-}OH \qquad (IV)$$

a un indice d'hydroxyle $I_{OH}$ compris entre 40 et 60 mg KOH/g ;

- (β) de 37 à 50 % poids/poids d'une résine tackifiante compatible (B) de masse molaire moyenne en nombre comprise entre 200 Da et 10 kDa ; et
- (γ) de 0,01 à 3 % poids/poids d'un catalyseur de réticulation (C).

La composition adhésive selon l'invention peut, de façon très avantageuse, être préparée à partir de matières premières dont certaines, notamment les acides gras dimérisés et les alcools gras dimérisés mis en oeuvre pour la fabrication de la composition (A2), sont d'origine naturelle et renouvelable. De plus, ladite composition adhésive conduit, après enduction sur un support et réticulation, à la formation d'un support auto-adhésif qui présente des propriétés de pouvoir adhésif et de tack du même niveau que celles obtenues avec les compositions adhésives enseignées par les demandes WO 09/106699 et EP2336208.

Dans le présent texte :

- les masses molaires moyennes en nombre indiquées pour les polymères sont déterminées par chromatographie à perméation de gel dans le THF (ou GPC, également appelée chromatographie par exclusion de taille ou SEC), avec étalonnage par rapport à un polystyrène standard de poids moléculaire externe certifié ;
- les viscosités Brookfield indiquées sont mesurées selon la norme DIN ISO 2555 par un viscosimètre Brookfield RTV, éventuellement équipé (selon la température de mesure) d'un système Thermosel.

**<u>1. Composition (A)</u> :**

Les radicaux et groupes définis précédemment dans les formules générales (I), (II), (III) et (IV) conservent la même signification dans la présente description, en l'absence d'indication contraire.

La composition (A) est constituée, pour 10 à 50 % poids/poids, du polymère (A1) de formule (I).

**<u>1.1. Polymère (A1) de formule (I) :</u>**

Selon un 1$^{er}$ mode de réalisation, le polymère (A1) est un polyéther, correspondant à la formule (I) dans laquelle m égale 0. Ce mode de réalisation est tout particulièrement préféré.

Selon un 2$^{ème}$ mode de réalisation, le polymère (A1) est un polyuréthane, correspondant à la formule (I) dans laquelle m est différent de 0, et de préférence m est inférieur ou égal à 10.

Selon une variante davantage préférée de ces 2 modes de réalisation, le (ou les) polymères (A1) de formule (I) a l'une et/ou l'autre des caractéristiques suivantes :

- $R^4$ et $R^5$, identiques ou différents, représentent chacun un radical méthyle ou éthyle;
- $R^2$ est choisi parmi les radicaux divalents : éthylène, isopropylène, n-propylène, n-butylène, éthyl-éthylène.

Selon une variante encore davantage préférée de ces 2 modes, le (ou les) polymères (A1) de formule (I) est tel que :

- p = 0 ou 1 ;
- $R^4$ et $R^5$ représentent chacun le radical méthyle ; et
- $R^2$ est un radical alkylène à 3 atomes de carbone.

Selon une autre variante préférée, le polyéther (A1) de formule (I) est tel que sa masse molaire moyenne en nombre varie de 30 à 40 kDa et sa viscosité, mesurée à 23°C, de 30 à 37 Pa.s.

Selon une variante également avantageuse, le polyéther (A1) de formule (I) a un indice de polymolécularité allant de 1 à 2. L'indice de polymolécularité est le rapport de la masse moléculaire moyenne en poids à la masse moléculaire moyenne en nombre. Dans ce cas, le polyéther (A1) de formule (I) peut être préparé à partir d'un polyéther diol de formule $H\text{-}[OR^2]_n\text{-}OH$ ayant lui-même un indice de polymolécularité allant de 1 à 2. Ce dernier polyéther diol peut être obtenu, de façon connue, par polymérisation de l'oxyde d'alkylène correspondant en présence d'un catalyseur

à base d'un double complexe métal-cyanure. Des produits commerciaux correspondants sont également disponibles sous la dénomination ACCLAIM® de la société Bayer.

Le polymère (A1) de formule (I) est préparé par le procédé décrit dans les demandes de brevet EP 2336208 ou WO 2009/106699 selon qu'il s'agit, respectivement, d'un polyéther (cas où m égale 0) ou d'un polyuréthane (cas où m représente un nombre entier non nul).

La composition (A) est également constituée pour 50 à 90% poids/poids d'une composition (A2) de polymères à terminaisons alkoxysilanes hydrolysables.

**1.2. Composition (A2) de polymères de formule (II) :**

La composition (A2) de polyuréthanes à terminaisons alkoxysilanes de formule (II) est préparée selon un procédé en 3 étapes séquentielles.

**1ère étape** : Préparation d'une composition (A2-1) d'indice hydroxyle $I_{OH}$ compris entre 40 et 60 mg KOH/g et comprenant au moins 85 % poids/poids de polyesters diols de formule (IV) :

Dans cette 1ère étape, on fait réagir par une réaction de polycondensation :

- des acides gras dimérisés ayant un indice d'acide IA compris entre 190 et 200 mg KOH/g, compris à raison d'au moins 92 % poids/poids (de préférence au moins 95%) dans une composition (A2-1-1) ; avec un excès stoechiométrique
- d'alcools gras dimérisés ayant un indice d'hydroxyle $I_{OH}$ compris entre 200 et 220 mg KOH/g compris à raison d'au moins 92 % (de préférence au moins 95%) dans une composition (A2-1-2).

Les acides gras dimérisés de la composition (A2-1-1) sont connus également de l'homme de l'art sous la dénomination d' « acides gras dimères » ou encore « dimères d'acides gras ». Lesdits acides désignent les produits de dimérisation des acides gras mono- ou poly-insaturés comprenant de 1 à 3 doubles liaisons et/ou des esters correspondants.

Les acides gras dimérisés préférés sont obtenus à partir d'acide gras de C6 à C22, de préférence de C10 à C22 et plus particulièrement de C14 à C22 riches en chaines alkyles en C18 insaturées.

On peut citer à titre d'exemple les produits de dimérisation :

- de l'acide oléïque, de l'acide linoléïque, de l'acide linolénique, de l'acide palmitoléïque, de l'acide élaïdique ;
- des mélanges d'acides gras insaturés obtenus par hydrolyse des graisses et des huiles naturelles telles que les huiles de tournesol, de soja, d'olive, de colza, de lin, de palme, de coton, de jojoba, de maïs, de pin, de pépins de raisin et de tallol qui est un sous-produit de la fabrication de la pâte à papier ;

ainsi que les acides gras dimérisés saturés correspondants, obtenus par hydrogénation en utilisant un catalyseur au Nickel.

Ces acides gras insaturés sont extraits de ces produits naturels, par exemple sous forme d'esters méthyliques par transestérification au méthanol des triglycérides correspondants, suivie d'une saponification des esters méthyliques correspondants.

Les acides gras insaturés ainsi obtenus en mélange sont alors oligomérisés par chauffage selon une réaction de condensation sur les doubles liaisons, qui conduit à la formation de mélanges techniques contenant environ 25 % d'acides monocarboxyliques (acides monomères) souvent isomérisés par rapport aux acides de départ, 70 % d'acides dicarboxyliques (acides dimères) avec le double de nombre de carbone par rapport aux acides de départ et 5 % d'acides tricarboxyliques (acides trimères) ayant le triple de nombre de carbone par rapport aux acides de départ. Par purification de ce mélange, on obtient les différents grades commerciaux d'acides dimères, monomères ou trimères qui peuvent exister sous forme hydrogénée ou non hydrogénée.

Les dimères d'acides gras sont isolés par distillation de ces derniers mélanges, pour former les dimères porteurs de 2 fonctions carboxyliques (acides dicarboxyliques) présents à raison d'au moins 92 % poids/poids dans une composition qui est utilisable, en tant que composition (A2-1-1) pour la préparation des polyesters diols de la 1ère étape du procédé d'obtention de la composition (A2).

Les formules suivantes sont données à titre illustratif de quelques acides gras dimérisés :

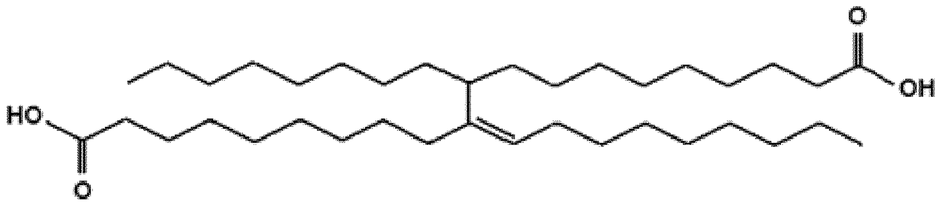

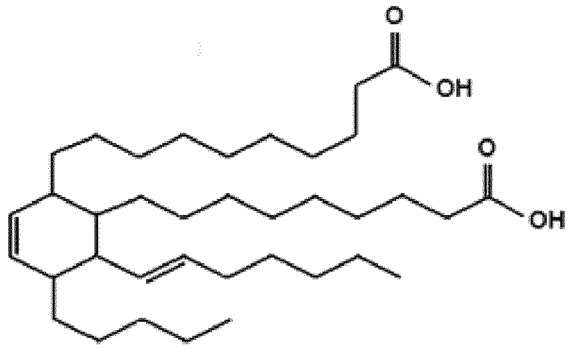

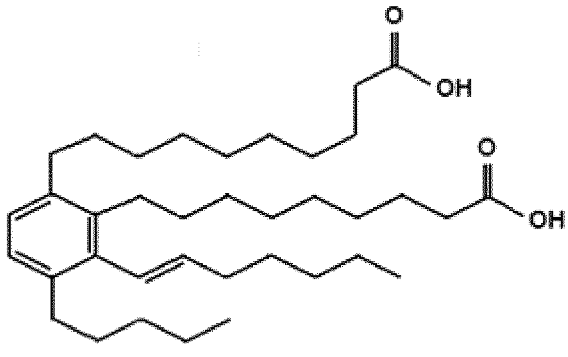

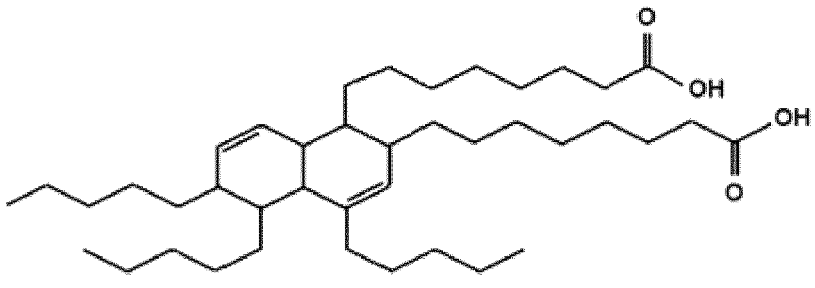

De nombreuses compositions de tels acides gras dimérisés sont disponibles commercialement, parmi lesquelles on peut citer les produits de la gamme Pripol®, distribuée par la société Croda, et notamment le Pripol® 1013 qui est une composition comprenant de 95 à 98 % d'acides gras dimérisés dont l'indice d'acide IA est compris entre 194 et 198 mg KOH/g.

La signification de $R^{12}$ correspondant à un acide gras dimérisé dont l'Indice d'Acide IA est compris dans ce domaine est tout particulièrement préférée.

L'indice d'acide IA est le nombre de fonction carboxylique par gramme d'acides gras dimérisés de (A2-1-1), le dit nombre étant exprimé sous la forme d'équivalent en milligrammes de KOH nécessaire pour neutraliser l'acidité de 1 gramme de corps gras, déterminé par titrimétrie. Le dit nombre est relié à la masse molaire moyenne en nombre M par la relation :

$$IA = 56{,}1x2000/M$$

Les alcools gras dimérisés d'$I_{OH}$ compris entre 200 et 220 mg KOH/g sont obtenus par hydrogénation catalytique des dimères d'acides gras sous forme de diester méthylique qui ont été décrits précédemment. Cette hydrogénation conduit à la réduction des 2 fonctions esters en 2 fonctions -OH. Ces alcools gras dimérisés sont donc obtenus sous la forme d'une composition dont ils constituent au moins 92 % en poids (de préférence au moins 95 %), et qui est utilisable en tant que composition (A2-1-2.) pour la mise en oeuvre de cette 1$^{ère}$ étape.

Des compositions de tels alcools gras dimérisés sont également disponibles commercialement, comme par exemple le Pripol® 2033 qui est une composition comprenant au moins 96 % d'alcools gras dimérisés aliphatiques dont l'$I_{OH}$ est compris entre 202 et 212 mg KOH/g.

La signification de $R^{11}$ correspondant à un alcool gras dimérisé lont l'indice hydroxyle $I_{OH}$ est compris dans ce domaine est tout particulièrement préférée.

L'indice d'hydroxyle $I_{OH}$ est le nombre de fonctions hydroxyle par gramme d'alcools gras dimérisés de (A2-1-2), le dit nombre étant exprimé sous la forme d'équivalent en milligrammes de KOH utilisés dans le dosage des fonctions hydroxyle, déterminé par titrimétrie.

Le dit nombre est relié à la masse molaire moyenne en nombre M par la relation :

$$I_{OH} = 56{,}1x2000/M$$

Dans cette 1$^{ère}$ étape de préparation de la composition (A2-1) de polyesters diols, on fait réagir les acides gras dimérisés de la composition (A2-1-1) avec un excès stoechiométrique des alcools gras dimérisés de la composition (A2-1-2). Cela signifie que les quantités pondérales des 2 compositions mises en oeuvre correspondent à un excès du nombre équivalent de fonctions -OH présentes dans (A2-1-2) par rapport au nombre équivalent de groupes -COOH présents dans (A2-1-1).

De préférence, ces quantités correspondent à un rapport équivalent -OH/- COOH compris entre 1,46 et 1,86. Ledit rapport est défini comme étant égal au nombre équivalent de fonctions -OH présentes dans (A2-1-2), divisé par le nombre équivalent de fonctions -COOH présentes dans (A2-1-1). Les quantités pondérales des réactifs (A2-1-1) et (A2-1-2) à charger dans le réacteur sont déterminées sur la base de ce rapport, ainsi que, pour les acides gras dimérisés de (A2-1-1), sur leur indice d'acide, et pour les alcools gras dimérisés de (A2-1-2), sur leur indice d'hydroxyle $I_{OH}$.

Les alcools gras dimérisés non réagis sont, le cas échéant, éliminés par distillation, et l'on obtient ainsi une composition (A2-1) ayant un indice d'hydroxyle compris entre 40 et 60 mg KOH/g et comprenant au moins 85 % poids/poids, de préférence au moins 90 % poids/poids, de polyester diols de formule (IV).

Certaines compositions de polyesters diols répondant à la définition de la composition (A2-1) sont également disponibles au plan commercial, comme par exemple le Priplast® 1838 de la société Croda, dont l'indice d'hydroxyle $I_{OH}$ est égal à 55.

Selon une variante préférée de l'invention, l'indice hydroxyle $I_{OH}$ du polyester diol de formule (IV) correspondant au bloc polyester divalent $R^{10}$, varie dans un domaine allant de 45 à 55 mg KOH/g.

**<u>2$^{ème}$ étape</u>** : Préparation d'une composition (A2-2) comprenant au moins 85 % poids/poids de polyuréthanes à terminaisons hydroxyles :

On traite la composition (A2-1-1) comprenant les polyesterdiols obtenue précédemment avec le diisocyanate de formule (V) :

$$NCO\text{-}R^6\text{-}NCO \qquad (V)$$

dans des quantités correspondant à un rapport équivalent molaire des nombres de fonctions NCO/OH compris entre 0,3 et 0,7 et de préférence égal à environ 0,5 ;
de manière à obtenir les polyuréthanes à terminaisons hydroxyles de formule (VI) :

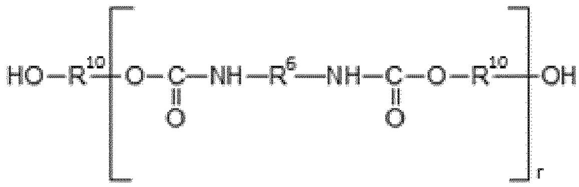

(VI)

dans laquelle, de préférence, r est inférieur ou égale à 10.

Toutefois, il reste également, à l'issue de cette 2ème étape, des polyesterdiols non réagis de formule (IV), de sorte que la composition (A2-2) comprend également une quantité résiduelle desdits polyesterdiols.

Les polyuréthanes à terminaison hydroyle de formule (VI) sont compris dans la composition (A2-2) à raison d'au moins 85 % poids/poids, de préférence au moins 90 % poids/poids.

Selon une variante préférée, le radical $R^6$ est choisi parmi l'un des radicaux divalents suivants dont les formules ci-dessous font apparaître les 2 valences libres :

- a) le radical divalent dérivé de l'isophorone :

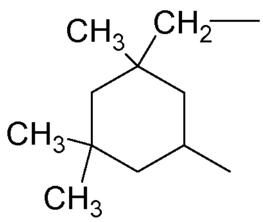

- b)

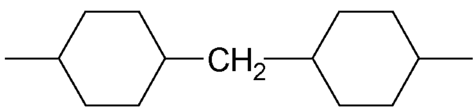

- c)

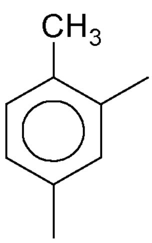

ou

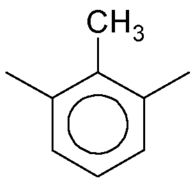

- d)

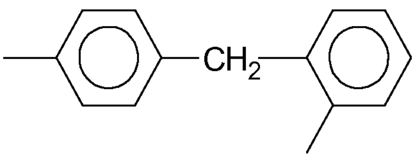

ou

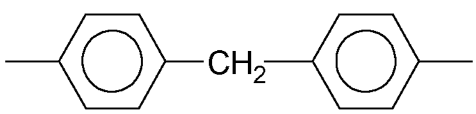

- e)

$-(CH_2)_6-$

(ou radical hexaméthylène).

Selon une variante tout particulièrement préférée, $R^6$ est le radical divalent dérivé de l'isophorone :

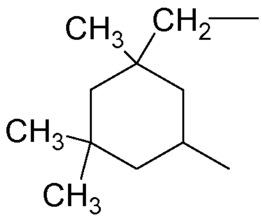

<u>**3ème étape**</u> : Obtention de la composition (A2) comprenant au moins 85 % poids/poids des polyuréthanes à terminaisons alkoxysilanes de formule (II) :

On traite la composition de polyuréthanes à terminaison hydroxyle (A2-2) obtenue à la $2^{ème}$ étape avec l'isocyanatosilane de formule (VII) :

$$NCO\text{-}R^7\text{-}Si(R^8)_q(OR^9)_{3\text{-}q} \qquad (VII)$$

à raison d'une quantité correspondant à un rapport équivalent molaire des nombres de fonctions NCO/OH comprise entre 0,90 et 1,05 et de préférence égal à environ 1.

On obtient ainsi les polyuréthanes à terminaisons alkoxysilanes de formule (II) compris à raison d'au moins 85 % poids/poids dans la composition (A2), de préférence à raison d'au moins 90 % poids/poids. Selon une variante préférée, dans la formule (II) r est inférieur ou égal à 10.

Selon une autre variante préférée :

- $R^7$ est le radical divalent méthylène ou n-propylène ;
- $R^8$ et $R^9$ représentent chacun le radical méthyle ou éthyle ; et/ou
- q égale 0 ou 1.

Selon une variante encore plus préférée :

- $R^7$ est le radical n-propylène, et
- le groupe $-Si(R^8)_q(OR^9)_{3-q}$ est le radical triméthoxysilyl.

Ces variantes préférées sont obtenues en utilisant l'isocyanatosilane de formule (VII) appropriée.

Les $2^{ème}$ et $3^{ème}$ étapes du procédé qui viennent d'être décrites sont conduites dans des conditions anhydres, de manière à éviter l'hydrolyse des groupes alkoxysilanes. Un domaine de température typique pour la mise en oeuvre de ces étapes réactionnelles est de 30° à 120°C, et plus particulièrement de 60 à 105°C. La $2^{ème}$ étape du procédé est avantageusement mise en oeuvre en présence d'un catalyseur organo-métallique.

Selon une variante préférée de la composition adhésive selon l'invention, la composition (A) est constituée de 10 à 30 % poids/poids du polymère (A1) de formule (I) et de 70 à 90 % poids/poids de la composition (A2) comprenant les polymères à terminaisons alkoxysilanes hydrolysables de formule (II).

**2. Résine tackifiante compatible (B) :**

En ce qui concerne la ou les résines tackifiantes (B) qui sont comprises dans la composition selon l'invention, on entend désigner par les termes "résine tackifiante compatible" une résine tackifiante qui, lorsqu'elle est mélangée dans les proportions 50%/50% avec la composition (A), donne un mélange substantiellement homogène.

Les résines (B) sont avantageusement choisies parmi :

- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène, ledit procédé pouvant

également comprendre une réaction avec des phénols ;

- (iii) les colophanes d'origine naturelle ou modifiées (telles que par exemple la colophane extraite de la gomme de pins, la colophane de bois extraite des racines de l'arbre) et leurs dérivés hydrogénés, dimérisés, polymérisés ou estérifiés par des monoalcools ou des polyols (comme le glycérol) ;
- (iv) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (v) les résines terpéniques, résultant généralement de la polymérisation d'hydrocarbures terpéniques comme par exemple le mono-terpène (ou pinène) en présence de catalyseurs de Friedel-Crafts ;
- (vi) les copolymères à base de terpènes naturels, par exemple le styrène/terpène, l'alpha-méthyl styrène/terpène et le vinyl toluène/terpène ; ou bien
- (vii) les résines acryliques ayant une viscosité à 100°C inférieure à 100 Pa.s.

Selon une variante particulièrement préférée de la composition adhésive selon l'invention, on utilise comme résine (B) une résine de type (iii) ou de type (v). On peut donner comme exemple de résine de type (iii) qui est disponible commercialement la Dertoline® G2L de la Société DRT qui est une colophane estérifiée au glycérol.

**3. Catalyseur de réticulation (C) :**

Le catalyseur de réticulation (C) utilisable dans la composition selon l'invention peut être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR® AA75 auprès de la société DuPont), de l'aluminium comme le chélate d'aluminium (disponible commercialement sous la dénomination K-KAT® 5218 auprès de la société King Industries), des amines comme le 1,8-diazobicyclo (5.4.0) undécène-7 ou DBU.

La composition adhésive réticulable à chaud selon l'invention comprend de préférence :

- (a) de 50 à 55 % poids/poids de composition (A) de polymères à terminaisons alkoxysilanes hydrolysables,
- (β) de 43 à 48 % poids/poids de résine tackifiante (B), et
- (y) de 0,45 à 2,5% poids/poids de catalyseur de réticulation (C).

**4. Autres ingrédients de la composition selon l'invention :**

A titre optionnel, la composition selon l'invention peut également inclure des polymères thermoplastiques souvent utilisés dans la préparation des HMPSA, tels que l'Ethylène Vinyl Acétate (EVA) ou des copolymères blocs styréniques.

La composition adhésive réticulable à chaud selon l'invention peut en outre comprendre jusqu'à 3 % d'un dérivé alkoxysilane hydrolysable, en tant qu'agent dessicant, et de préférence un dérivé de triméthoxysilane. Un tel agent prolonge avantageusement la durée de conservation de la composition selon l'invention durant le stockage et le transport, avant son utilisation. On peut citer par exemple le gamma-métacryloxypropyltriméthoxysilane disponible sous la dénomination commerciale Silquest® A-174 auprès de la société US Momentive Performance Materials Inc.

La composition selon l'invention peut aussi inclure un plastifiant tel qu'un phtalate ou un benzoate, une huile paraffinique et naphténique (comme le Primol® 352 de la société ESSO) ou encore une cire d'un homopolymère de polyethylène (comme l'A-C® 617 de Honeywell), ou une cire d'un copolymère de polyéthylène et d'acétate de vinyle, ou encore des pigments, des colorants ou des charges.

Enfin, une quantité de 0,1 à 2 % d'un ou plusieurs stabilisants (ou anti-oxydants) est de préférence incluse dans la composition selon l'invention. Ces composés sont introduits pour protéger la composition d'une dégradation résultant d'une réaction avec de l'oxygène qui est susceptible de se former par action de la chaleur ou de la lumière. Ces composés peuvent inclure des anti-oxydants qui piègent les radicaux libres, comme par exemple les Irganox® 245 et Irganox® 1010. Ces anti-oxydants peuvent être utilisés seuls ou en combinaison avec d'autres anti-oxydants ou des stabilisants UV.

**5. Préparation de la composition selon l'invention :**

La composition adhésive réticulable à chaud selon l'invention peut être préparée par un procédé qui comprend :

- une étape de mélange à l'abri de l'air, de préférence sous atmosphère inerte, de la composition (A2) de polymères de formule (II) avec le polymère (A1) de formule (I) et avec la ou les résines tackifiantes (B), à une température

comprise entre 50 et 170°C, de préférence entre 100 et 170°C, puis

- une étape de refroidissement dudit mélange à une température allant de 50 à 90°C, et avantageusement d'environ 70 °C, puis
- une étape d'incorporation dans ledit mélange du catalyseur (C) et, le cas échéant, de l'agent dessicant et des autres composants optionnels.

On obtient avantageusement ainsi une composition dont la viscosité Brookfield mesurée à 100°C est comprise entre 10 et 100 Pa.s, la rendant apte à son enduction sur une couche support. Ladite viscosité est mesurée, selon la norme DIN ISO 2555, par un viscosimètre Brookfield RTV équipé du système Thermosel destiné aux mesures de viscosité à haute température, muni d'une aiguille A27 tournant à une vitesse adaptée à la sensibilité du capteur (en moyenne 10 tr/min).

La présente invention a également pour objet un support auto-adhésif susceptible d'être obtenu par le procédé comprenant :

- (a) le préchauffage à une température comprise entre 50 et 130°C de la composition adhésive telle que définie précédemment, puis
- (b) son enduction sur une couche support, puis
- (c) sa réticulation, par chauffage du support ainsi enduit à une température comprise entre 50 et 150°C.

L'étape (b) d'enduction de la couche support est réalisée au moyen de dispositifs d'enduction connus, comme par exemple une buse à lèvre ou de type rideau, ou encore au rouleau. Elle met en oeuvre un grammage de composition adhésive allant de 3 à 500 g/$m^2$, de préférence de 10 à 250 g/$m^2$. Le matériau utilisable pour la couche support est par exemple du papier ou un film d'un matériau polymère à une ou plusieurs couches.

Le temps nécessaire à la réticulation de l'étape (c) peut varier dans de larges limites, par exemple entre 1 seconde et 10 minutes, en fonction du grammage de composition adhésive déposé sur la couche support, de la température de chauffage, et de l'humidité relative.

Cette étape de réticulation thermique a pour effet la création - entre les chaînes polymériquesà terminaisons aloxysilanes hydrolysables de la composition (A) et sous l'action de l'humidité atmosphérique- des liaisons de type siloxane qui conduisent à la formation d'un réseau polymérique tri-dimensionnel. La composition adhésive ainsi réticulée est un adhésif sensible à la pression qui confère à la couche support qui en est revêtue le pouvoir adhésif et le tack désirables.

Ainsi, un support de PolyEthylèneTéréphtalate (PET) d'épaisseur 50 $\mu$m, revêtu à raison d'un grammage de 50 g/$m^2$, présente une adhésion permanente sur un substrat d'acier inoxydable correspondant à un pouvoir adhésif (mesuré par le test de pelage à 180° sur acier inoxydable décrit ci-après) avantageusement compris entre 1 et 10 N/cm. Le tack de ce même support à température ambiante (mesuré par le test d'adhésion instantanée de la boucle décrit ci-après) est avantageusement compris entre 1 et 10 N/$cm^2$.

Enfin, le joint de colle formé après application sur un substrat de la couche support revêtue de la composition réticulée assure la fixation de ladite couche support dans un domaine de température allant de -60°C à +200°C.

Le support auto-adhésif selon l'invention peut également comprendre une couche anti-adhérente protectrice recouvrant la couche de PSA et appliquée (ou laminée) sur celle-ci par simple pression.

La présente invention concerne également l'utilisation du support auto-adhésif défini précédemment pour la fabrication d'étiquettes et/ou rubans auto-adhésifs à simple ou double face.

Le grammage de composition adhésive réticulable à chaud nécessaire pour la fabrication d'étiquettes auto-adhésives peut aller de 10 à 100 g/$m^2$, de préférence de 20 à 50 g/$m^2$. Celui nécessaire pour la fabrication de rubans auto-adhésifs peut varier dans un domaine beaucoup plus large allant de 3 à 500 g/$m^2$, de préférence de 15 à 250 g/$m^2$ par face.

Les exemples suivants sont donnés à titre purement illustratif de l'invention et ne sauraient être interprétés pour en limiter la portée.

<u>Exemple A</u> (référence) : préparation d'une composition (A2) comprenant au moins 90 % poids/poids de polymères à terminaisons alkoxysilanes hydrolysables de formule (II), obtenue à partir de Pripol® 1013 et de Pripol® 2033 :

<u>1ère étape</u> : Préparation d'une composition (A2-1) ayant un indice hydroxyle $I_{OH}$ égal à 45 mg KOH/g et comprenant au moins 90% poids/poids de polyesters diols de formule (IV) :

542 g (1,00 mole) d'alcools gras dimères Pripol® 2033 ayant un $I_{OH}$ de 207 mg KOH/g, 369 g (0,64 mole) d'acides gras dimères Pripol® 1013 ayant un indice d'acide de 196 mg KOH/g, et 1,5 g d'un mélange 50 / 50 en poids d'acide hypophosphoreux et d'acide méthane sulfonique (0,2 % en poids du mélange des réactifs) sont introduits dans un réacteur double enveloppe de 1 litre et chauffés jusqu'à 90°C pendant 30 minutes avec un léger bullage d'azote. Le

milieu réactionnel est ensuite porté jusqu'à 180° C sous couverture d'azote, sous agitation mécanique et sous vide partiel de 10 mbar pour éliminer l'eau générée. La réaction de condensation est poursuivie pendant environ 6 heures jusqu'à l'obtention d'un indice d'acide inférieur à 0,1 mg KOH/g.

Une fois la réaction terminée, le milieu réactionnel est refroidi à environ 85°C et le milieu filtré.

On obtient 881 g d'une composition ayant un indice hydroxyle $I_{OH}$ égal à 45 mg KOH/g et comprenant au moins 90% poids/poids de polyesters diols.

Cette composition est obtenue à partir de matières premières d'origine renouvelable, à raison de 100% poids/poids.

2ème étape : Préparation d'une composition (A2-2) comprenant au moins 90 % poids/poids de polyuréthanes à terminaisons hydroxyles de formule (VI) :

Dans un réacteur fermé de 250 ml équipé d'une agitation, de moyens de chauffe, d'un thermomètre et relié à une pompe à vide, on introduit 176,9 g de la composition obtenue à la 1ère étape (contenant un nombre équivalent total de fonctions - OH égal à 142 mmol). L'ensemble est chauffé à 85°C et maintenu à pression réduite de 20 mbar durant 1 heure pour déshydrater les polyesters polyols.

On introduit alors dans le réacteur maintenu à pression atmosphérique et porté à une température de 90°C :

- 20 mg d'un catalyseur de carboxylate de bismuth/zinc (Borchi® Kat VP0244 de la société Borchers GmbH), et
- 7,9 g de diisocyanate d'isophorone (ou IPDI, titrant 37,6 % poids/poids en groupe -NCO), contenant 71 mmoles de fonctions -NCO.

Les quantités introduites correspondent ainsi à un ratio molaire NCO/OH égal à 0,5.

La réaction de polyaddition est poursuivie durant 3 heures jusqu'à consommation complète des fonctions -NCO du diisocyanate d'isophorone (détectée par la disparition de la bande -NCO à l'analyse Infra-rouge).

On obtient 184,8 g d'une composition (A2-2) ayant une teneur en fonction - OH de 0,384 mmol/g, et comprenant au moins 90 % de polyuréthanes à terminaisons hydroxyles.

3ème étape : Obtention de la composition (A2) comprenant au moins 90% poids/poids de polyuréthanes à terminaisons alkoxysilanes hydrolysables de formule (II) :

On introduit dans le réacteur de la 2ème étape 15,0 g de gamma-isocyanato-n-propyl-triméthoxysilane (titrant 19,9 % en poids/poids de groupe -NCO), soit 70,98 mmoles de NCO correspondant à un ratio NCO/OH égal à 1.

Le réacteur est alors maintenu sous atmosphère inerte à 100°C pendant 1 heure et demie jusqu'à réaction complète (détectée par la disparition de la bande -NCO à l'analyse Infra-rouge).

On obtient 200,0 grammes d'une composition visqueuse à température ambiante, dont la viscosité à 100°C est de 8450 mPa.s (mesurée au viscosimètre Brookfield à 100°C, avec une aiguille 27 tournant à raison de 20 tr/min) comprenant au moins 90 % poids/poids de polyuréthanes à terminaisons alkoxysilanes hydrolysables de formule (II).

La part pondérale de cette composition qui est obtenue à partir de matières premières renouvelables correspond au poids de la composition (A2-1) de polyesters diols, soit à 88,5% poids/poids.

Exemple B (référence) : préparation d'une composition (A2) comprenant au moins 85 % poids/poids de polyuréthanes à terminaisons alkoxysilanes hydrolysables de formule (II), obtenue à partir de Priplast® 1838 :

On répète la 2ème étape de l'exemple A, en introduisant dans le réacteur fermé de 250 ml 86,34 g de la composition commerciale de polyester diols Priplast® 1838 (dont l'indice hydroxyle $I_{OH}$ est égal à 55 mg KOH/g), et en ajustant la quantité pondérale d'IPDI de manière à maintenir le ratio NCO/OH égal à 0,5. Le Priplast® 1838 est obtenu à 100% poids/poids à partir de matières premières d'origine renouvelable.

On répète également la 3ème étape de l'exemple A en ajustant la quantité pondérale de gamma-isocyanato-n-propyl-triméthoxysilane, de manière à maintenir le ratio NCO/OH égal à 1.

On obtient une composition visqueuse à température ambiante, dont la viscosité à 100°C est de 3180 mPa.s (mesurée au viscosimètre Brookfield à 100°C, avec une aiguille 27 tournant à raison de 20 tr/min).

Cette composition comprend au moins 85 % poids/poids de polyuréthanes à terminaisons alkoxysilanes hydrolysables de formule (II).

La part pondérale de cette composition qui est obtenue à partir de matières premières renouvelables correspond au poids de la composition (A2-1) de polyesters diols, soit à 86,3% poids/poids.

Exemple 1 (selon l'invention) :

1) Préparation d'une composition adhésive réticulable par chauffage, à base de la composition de polymères à terminaisons alkoxysilanes hydrolysables de l'exemple A:

On utilise dans cet exemple comme polymère (A1) de formule (I) le GENIOSIL® STP-E30, disponible auprès de la société Wacker. Ce polymère est un polyéther de formule (I) dans laquelle m égale 0, p égale 1, $R^4$ et $R^5$ représentent le radical méthyle, $R^3$ est le radical méthylène, $R^2$ est le radical isopropylène. Ce polyéther a pour viscosité (mesurée à 23°C) 30 Pa.s, et pour masse moléculaire en nombre 38 kDa.

La composition figurant dans le tableau suivant est préparée en introduisant tout d'abord la résine tackifiante Dertoline® G2L dans un réacteur en verre sous vide, sous agitation et chauffé à environ 130 °C. Puis, une fois la résine bien fondue, la composition (A2) de l'exemple A est ajoutée.

Le mélange est agité sous vide durant 45 minutes, puis refroidi à 100 °C. Le GENIOSIL® STP-E30 est alors ajouté. Le mélange est agité sous vide durant 20 minutes, puis refroidi à 80 °C. L'agent dessicant (Silquest A-174) et le catalyseur (K-KAT® 5218) sont ensuite introduits en même temps que les antioxydants Irganox® 245 et Irganox® 1010. Le mélange est maintenu sous vide et sous agitation durant 10 minutes supplémentaires.

La viscosité Brookfield de la composition ainsi obtenue est indiquée dans le tableau.

La part pondérale de cette composition qui est obtenue à partir de matières premières renouvelables est calculée à partir de :

- la part pondérale de la composition de l'exemple A qui est obtenue à partir de matières premières renouvelables (soit 88,5 %), pondérée par la teneur de ladite composition dans la composition du présent exemple (soit 39,12 %) et de
- la teneur dans la composition du présent exemple de la Dertoline G2L (soit 46,51%) qui est elle-même à 100 % d'origine renouvelable.

Cette part pondérale est de 80,7 % poids/poids.

2) Préparation d'une couche support PET revêtue de la composition réticulée, à raison d'un grammage égal à 50 g/$m^2$ :

On utilise comme couche support une feuille rectangulaire de PolyEthylèneTéréphtalate (PET) d'épaisseur 50 $\mu$m et de dimensions 20 cm sur 40 cm.

On préchauffe la composition obtenue en 1) à une température proche de 100 °C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 50 g/$m^2$, ce qui représente environ une épaisseur de l'ordre de 50 $\mu$m.

La feuille de PET ainsi revêtue est alors placée dans une étuve à 120 °C durant 8 minutes pour la réticulation de la composition, puis contrecollée sur une couche anti-adhérente protectrice consistant en une feuille de film siliconé, rectangulaire et de mêmes dimensions.

La couche support PET ainsi obtenue est soumise aux tests décrits ci-après.

Test de pelage à 180° sur plaque d'acier inoxydable :

Le pouvoir adhésif est évalué par le test de pelage (ou peel) à 180° sur plaque d'acier inoxydable tel que décrit dans la méthode FINAT n° 1, publiée dans le Manuel Technique FINAT 6ème édition, 2001. FINAT est la fédération internationale des fabricants et transformateurs d'étiquettes auto-adhésives. Le principe de ce test est le suivant.

Une éprouvette sous forme de bande rectangulaire (25 mm x 175 mm) est découpée dans la couche support PET revêtu de la composition réticulée obtenue précédemment. Cette éprouvette est fixée sur les 2/3 de sa longueur (après enlèvement de la portion de couche anti-adhérente protectrice correspondante), sur un substrat constitué d'une plaque d'acier inoxydable. L'assemblage obtenu est laissé 20 minutes à température ambiante. Il est alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions.

Le résultat correspondant est exprimé en N/cm et indiqué dans le tableau suivant.

Test d'adhésion instantanée (également dénommé test de la boucle) :

Le pouvoir collant immédiat ou tack est évalué par le test d'adhésion instantanée dit de la boucle, décrit dans la méthode FINAT n° 9, dont le principe est le suivant.

Une éprouvette sous forme de bande rectangulaire (25 mm x 175 mm) est découpée dans la couche support PET revêtu de la composition réticulée obtenue précédemment. Après enlèvement de la totalité de la couche anti-adhérente protectrice, les 2 extrémités de cette bande sont jointes de manière à former une boucle dont la couche adhésive est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque.

Le résultat correspondant est exprimé en $N/cm^2$ et indiqué dans le tableau suivant.

Temps de résistance du joint de colle au cisaillement statique à 90°C :

Le maintien à température élevée du pouvoir adhésif de la couche support PET obtenue précédemment en 2) est évalué par un test qui détermine le temps de résistance du joint de colle au cisaillement statique à 90°C. Il est fait référence pour ce test à la méthode FINAT n° 8. Le principe est le suivant.

Une éprouvette sous forme de bande rectangulaire (25 mm x 75 mm) est découpée dans chacune des 2 couche support PET précédentes. Après enlèvement de la totalité de la couche anti-adhérente protectrice, une portion carrée de 25 mm de côté située à l'extrémité de la bande adhésive est fixée sur une plaque de verre.

La plaque d'essai ainsi obtenue est introduite, au moyen d'un support approprié, en position sensiblement verticale dans une étuve à 90°C, la partie non collée de la bande de longueur 50 mm se situant en dessous de la plaque. Après équilibrage thermique, la partie restée libre de la bande est reliée à une masse de 1 kg, l'ensemble du dispositif restant toujours durant la durée du test maintenu dans l'étuve à 90°C.

Sous l'effet de cette masse, le joint de colle qui assure la fixation de la bande sur la plaque est soumis à une contrainte de cisaillement. Pour mieux contrôler cette contrainte, la plaque d'essai est en fait placée de sorte à faire un angle de 2° par rapport à la verticale.

On note le temps au bout duquel la bande se décroche de la plaque à la suite de la rupture du joint de colle sous l'effet de cette contrainte.

Ce temps est indiqué dans le tableau suivant.

Exemples 2 et 3 (selon l'invention) et 4-7 (comparatifs) :

On répète l'exemple 1 avec les compositions indiquées dans le tableau suivant.

Les résultats obtenus sont également indiqués dans le tableau.

| Ingrédient | | Teneur en % poids/poids | | | | | | |
|---|---|---|---|---|---|---|---|---|
| | | Exemple 1 | Exemple 2 | Exemple 3 | Exemple 4 (comp.) | Exemple 5 (comp.) | Exemple 6 (comp.) | Exemple 7 (comp.) |
| Composition (A) | Teneur en GENIOSIL® STP-E30 (A1) | 25,4 | 15.0 | 25,4 | 25,0 | 5,1 | 25,0 | 0 |
| | Nature de (A2) | Exemple A | Exemple A | Exemple B | Exemple A | Exemple A | Exemple A | Exemple B |
| | Teneur en (A2) | 74,6 | 85,0 | 74,6 | 75,0 | 94,9 | 75,0 | 100 |
| (α) Composition (A) | | 51,76 | 53,01 | 51,76 | 41,92 | 51,56 | 61,97 | 51,12 |
| (β) Dertoline® G2L | | 46,51 | 45,26 | 46,51 | 56,35 | 46,71 | 36,30 | 46,15 |
| (γ) K-KAT® 5218 | | 0,50 | 0,50 | 0,50 | 0,50 | 0,50 | 0,50 | 2,00 |
| Irganox® 245 + Irganox® 1010 | | 0,73 | 0,73 | 0,73 | 0,73 | 0,73 | 0,73 | 0,73 |
| Silquest® A-174 | | 0 ,50 | 0,50 | 0,50 | 0,50 | 0,50 | 0,50 | 0,50 |
| Viscosité Brookfield à 100°C (Pa.s) | | 11,4 | 24,5 | 73,9 | 13,5 | 26 | 12,3 | 13,4 |
| Part pondérale d'origine renouvelable (% poids/poids) | | 81 | 85 | 80 | 84 | 90 | 77 | 90 |
| Pelage à 180° (N/cm) | | 7,4 | 6,7 | 3,5 | 1,2 | 6,3 | 0,8 | 7,0 |
| Adhésion instantanée ($N/cm^2$) | | 4,1 | 5,3 | 2,1 | 1,7 | 1,9 | 1,1 | 2,8 |
| Temps de résistance du joint de colle au cisaillement statique à 90°C | | > 24 heures | > 24 heures | > 24 heures | < 1' 15'' | < 47'' | < 48'' | < 25'' |

## Revendications

1. Composition adhésive réticulable par chauffage comprenant :

- (a) de 47 à 60 % poids/poids d'une composition (A) comprenant des polymères à terminaisons alkoxysilanes hydrolysables, ladite composition (A) étant constituée :

  - de 10 à 50 % poids/poids d'un polymère (A1) de formule (I) :

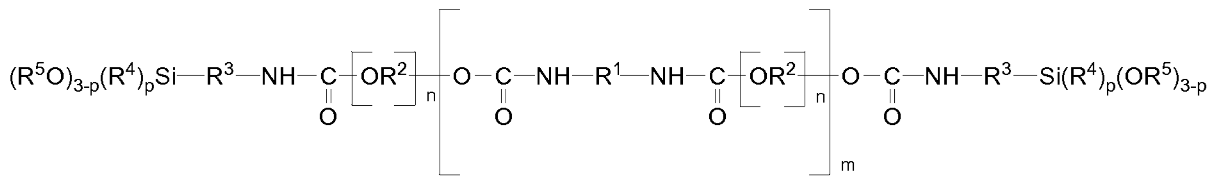

(I)

dans laquelle :

- $R^1$ représente un radical divalent hydrocarboné comprenant de 5 à 15 atomes de carbone qui peut être aromatique ou aliphatique, linéaire, ramifié ou cyclique;
- $R^2$ représente un radical divalent alkylène linéaire ou ramifié comprenant de 1 à 4 atomes de carbone ;
- $R^3$ représente un radical divalent alkylène linéaire comprenant de 1 à 3 atomes de carbone ;
- $R^4$ et $R^5$, identiques ou différents, représentent chacun un radical alkyle linéaire ou ramifié de 1 à 4 atomes de carbone, avec la possibilité lorsqu'il y a plusieurs radicaux $R^4$ (ou $R^5$) que ceux-ci soient identiques ou différents ;
- n est un nombre entier tel que la masse molaire moyenne en nombre du bloc polyéther de formule $-[OR^2]_n-$ est comprise entre 300 Da et 30 kDa ;
- m est ou bien égal à 0 ou bien un nombre entier non nul tel que la masse molaire moyenne en nombre du polymère de formule (I) est comprise entre 600 Da et 60 kDa ;

- p est un nombre entier égal à 0, 1 ou 2 ; et

- de 50 à 90 % poids/poids d'une composition (A2) comprenant au moins 85 % poids/poids de polyuréthanes à terminaisons alkoxysilanes hydrolysables de formule (II) :

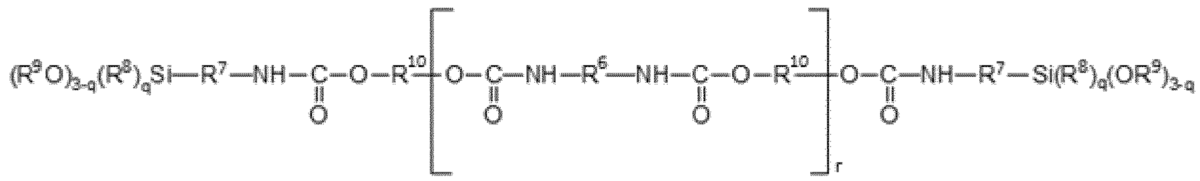

(II)

dans laquelle :

- $R^6$ représente un radical divalent hydrocarboné comprenant de 5 à 15 atomes de carbone qui peut être aromatique ou aliphatique, linéaire, ramifié ou cyclique;
- $R^7$ représente un radical divalent alkylène linéaire comprenant de 1 à 3 atomes de carbone ;
- $R^8$ et $R^9$, identiques ou différents, représentent chacun un radical alkyle linéaire ou ramifié de 1 à 4 atomes de carbone, avec la possibilité lorsqu'il y a plusieurs radicaux $R^8$ (ou $R^9$) que ceux-ci soient identiques ou différents ;
- q est un nombre entier égal à 0, 1 ou 2 ;
- r est un nombre tel que la masse molaire moyenne en nombre des polymères de formule (II) est comprise entre 900 Da et 11 kDa ;

- $R^{10}$ représente un bloc polyester divalent de formule (III) :

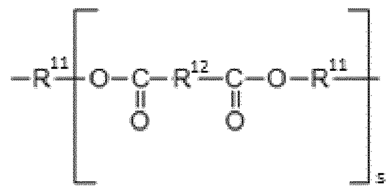

(III)

dans laquelle :

- $R^{11}$ représente un radical hydrocarboné divalent qui est dérivé d'un alcool gras dimérisé par remplacement de chacun des 2 groupes hydroxyle par une valence libre, ledit alcool ayant un indice d'hydroxyle $I_{OH}$ compris entre 200 et 220 mg KOH/g ;
- $R^{12}$ représente un radical hydrocarboné divalent qui est dérivé d'un acide gras dimérisé par remplacement de chacun des 2 groupes carboxyles -COOH par une valence libre, ledit acide ayant un indice d'acide IA compris entre 190 et 200 mg KOH/g ;
- s est un nombre tel que le polyester diol de formule IV :

$$OH\text{-}R^{10}\text{-}OH \qquad (IV)$$

a un indice d'hydroxyle $I_{OH}$ compris entre 40 et 60 mg KOH/g ;

- (β) de 37 à 50 % poids/poids d'une résine tackifiante compatible (B) de masse molaire moyenne en nombre comprise entre 200 Da et 10 kDa ; et
- (y) de 0,01 à 3 % poids/poids d'un catalyseur de réticulation (C).

2. Composition adhésive selon la revendication 1, **caractérisée en ce que** le polymère (A1) est un polyéther, correspondant à la formule (I) dans laquelle m égale 0.

3. Composition adhésive selon l'une des revendications 1 ou 2, **caractérisée en ce que** le polymère (A1) est tel que :

- $R^4$ et $R^5$, identiques ou différents, représentent chacun un radical méthyle ou éthyle;
- $R^2$ est choisi parmi les radicaux divalents : éthylène, isopropylène, n-propylène, n-butylène, éthyl-éthylène.

4. Composition adhésive selon l'une des revendications 1 à 3, **caractérisée en ce que** les polymères de formule (II) sont tels que l'indice hydroxyle $I_{OH}$ du polyester diol de formule (IV) correspondant au radical divalent polyester $R^{10}$, varie dans un domaine allant de 45 à 55 mg KOH/g.

5. Composition adhésive selon l'une des revendications 1 à 4, **caractérisée en ce que** les polymères de formule (II) sont tels que l'acide gras dimérisé dont est dérivé le radical $R^{12}$ a un indice d'acide IA compris entre 194 et 198 mg KOH/g.

6. Composition adhésive selon l'une des revendications 1 à 5, **caractérisée en ce que** les polymères de formule (II) sont tels que l'alcool gras dimérisé dont est dérivé le radical $R^{11}$ a un indice d'hydroxyle $I_{OH}$ compris entre 202 et 212 mg KOH/g.

7. Composition adhésive selon l'une des revendications 1 à 6, **caractérisée en ce que** les polymères de formule (II) sont tels que le radical $R^6$ est choisi parmi l'un des radicaux divalents suivants dont les formules ci-dessous font apparaître les 2 valences libres :

- a) le radical divalent dérivé de l'isophorone :

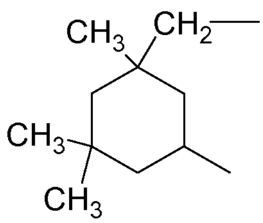

- b)

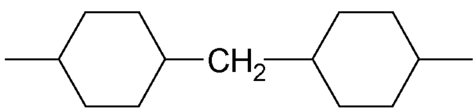

- c)

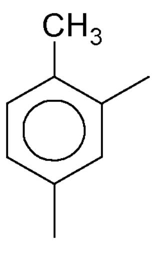

ou

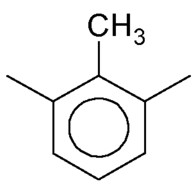

- d)

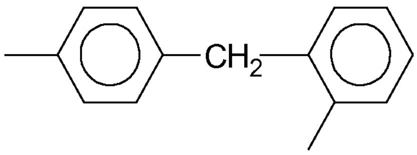

ou

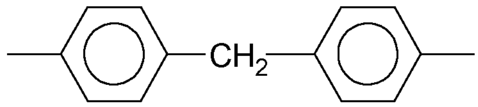

- e)

$$-(CH_2)_6-$$

(ou radical hexaméthylène).

**8.** Composition adhésive selon l'une des revendications 1 à 7, **caractérisée en ce que** les polymères de formule (II) sont tels que le radical $R^6$ est le radical divalent dérivé de l'isophorone.

**9.** Composition adhésive selon l'une des revendications 1 à 8, **caractérisée en ce que** les polymères de formule (II) sont tels que :

- $R^7$ est le radical divalent méthylène ou n-propylène ;
- $R^8$ et $R^9$ représentent chacun le radical méthyle ou éthyle ; et/ou
- q égale 0 ou 1.

**10.** Composition adhésive selon l'une des revendications 1 à 9, **caractérisée en ce que** la composition (A) est constituée de 10 à 30 % poids/poids du polymère (A1) et de 70 à 90 % poids/poids de la composition (A2).

**11.** Composition adhésive selon l'une des revendications 1 à 10, **caractérisée en ce que** la résine tackifiante (B) est choisie parmi :

- (iii) les colophanes d'origine naturelle ou modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols, comme le glycérol ; ou
- (v) les résines terpéniques, résultant généralement de la polymérisation d'hydrocarbures terpéniques comme par exemple le mono-terpène (ou pinène) en présence de catalyseurs de Friedel-Crafts.

**12.** Composition adhésive selon l'une des revendications 1 à 11, **caractérisée en ce qu'**elle comprend :

- (a) de 50 à 55 % poids/poids de composition (A) de polymères à terminaisons alkoxysilanes hydrolysables,
- ($\beta$) de 43 à 48 % poids/poids de résine tackifiante (B), et
- ($\gamma$) de 0,45 à 2,5% poids/poids de catalyseur de réticulation (C).

**13.** Composition adhésive selon l'une des revendications 1 à 12, **caractérisée en ce que** sa viscosité Brookfield mesurée à 100°C est comprise entre 10 et 100 Pa.s.

**14.** Support auto-adhésif susceptible d'être obtenu par le procédé comprenant :

- (a) le préchauffage à une température comprise entre 50 et 130°C de la composition adhésive telle que définie dans l'une des revendications 1 à 13, puis
- (b) son enduction sur une couche support, puis
- (c) sa réticulation, par chauffage du support ainsi enduit à une température comprise entre 50 et 150°C.

**15.** Utilisation du support auto-adhésif tel que défini dans la revendication 14 pour la fabrication d'étiquettes et/ou rubans auto-adhésifs à simple ou double face.

## Patentansprüche

**1.** Wärmevernetzbare Klebstoffzusammensetzung, die Folgendes umfasst:

- (α) 47 bis 60 % (w/w) einer Zusammensetzung (A), umfassend Polymere mit hydrolysierbaren Alkoxysilantermini, wobei die Zusammensetzung (A) aus Folgendem besteht:

- 10 bis 50 % (w/w) eines Polymers (A1) der Formel (I):

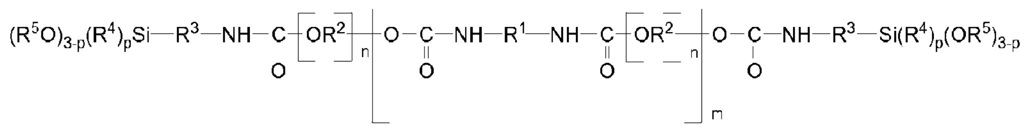

(I)

wobei:

- $R^1$ für einen zweiwertigen Kohlenwasserstoffrest steht, umfassend 5 bis 15 Kohlenstoffatome, der aromatisch oder aliphatisch, geradkettig, verzweigt oder zyklisch sein kann;
- $R^2$ für einen geradkettigen oder verzweigten zweiwertigen Alkylenrest steht, der 1 bis 4 Kohlenstoffatome umfasst;
- $R^3$ für einen geradkettigen zweiwertigen Alkylenrest steht, der 1 bis 3 Kohlenstoffatome umfasst;
- $R^4$ und $R^5$, gleich oder verschieden, jeweils für einen geradkettigen oder verzweigten Alkylrest mit 1 bis 4 Kohlenstoffatomen stehen, wobei im Falle mehrerer $R^4$- (oder $R^5$-) Reste die Möglichkeit besteht, dass diese gleich oder verschieden sind;
- n eine ganze Zahl ist, derart, dass die zahlenmittlere Molmasse des Blockpolyethers der Formel $-[OR^2]_n-$ im Bereich zwischen 300 Da und 30 kDa liegt;
- m entweder gleich 0 oder auch eine ganze Zahl ist, die nicht null ist, derart, dass die zahlenmittlere Molmasse des Polymers der Formel (I) im Bereich zwischen 600 Da und 60 kDa liegt;
- p eine ganze Zahl ist, die gleich 0, 1 oder 2 ist; und

- 50 bis 90 % (w/w) einer Zusammensetzung (A2), umfassend mindestens 85 % (w/w) Polyurethane mit hydrolysierbaren Alkoxysilantermini der Formel (II) :

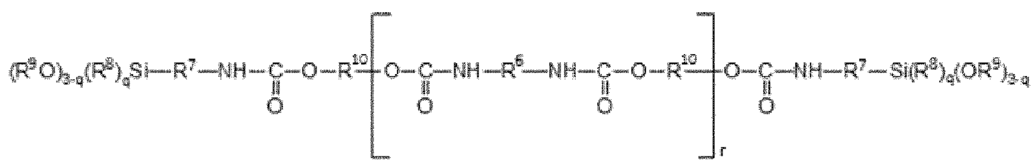

(II)

wobei:

- $R^6$ für einen zweiwertigen Kohlenwasserstoffrest steht, umfassend 5 bis 15 Kohlenstoffatome, der aromatisch oder aliphatisch, geradkettig, verzweigt oder zyklisch sein kann;
- $R^7$ für einen geradkettigen zweiwertigen Alkylenrest steht, der 1 bis 3 Kohlenstoffatome umfasst;
- $R^8$ und $R^9$, gleich oder verschieden, jeweils für einen geradkettigen oder verzweigten Alkylrest mit 1 bis 4 Kohlenstoffatomen stehen, wobei im Falle mehrerer $R^8$- (oder $R^9$-) Reste die Möglichkeit besteht, dass diese gleich oder verschieden sind;
- q eine ganze Zahl ist, die gleich 0, 1 oder 2 ist;
- r eine Zahl ist, derart, dass die zahlenmittlere Molmasse der Polymere der Formel (II) im Bereich zwischen 900 Da und 11 kDa liegt;

- $R^{10}$ für einen zweiwertigen Blockpolyester der Formel (III) steht:

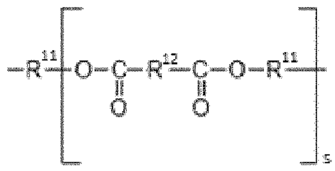

(III)

wobei:

- $R^{11}$ für einen zweiwertigen Kohlenwasserstoffrest steht, der von einem Fettalkohol abgeleitet ist, der jeweils durch Ersetzen von 2 Hydroxylgruppen durch eine freie Valenz dimerisiert ist, wobei der Alkohol eine Hydroxylzahl OHZ im Bereich zwischen 200 und 220 mg KOH/g aufweist;
- $R^{12}$ für einen zweiwertigen Kohlenwasserstoffrest steht, der von einer Fettsäure abgeleitet ist, die jeweils durch Ersetzen von 2 Carboxylgruppen -COOH durch eine freie Valenz dimerisiert ist, wobei die Säure eine Säurezahl SZ im Bereich zwischen 190 und 200 mg KOH/g aufweist;
- s eine Zahl ist, derart, dass das Polyesterdiol der Formel IV:

$$OH\text{-}R^{10}\text{-}OH \qquad (IV)$$

eine Hydroxylzahl OHZ im Bereich zwischen 40 und 60 mg KOH/g aufweist;

- (β) 37 bis 50 % (w/w) eines verträglichen Klebrigmacherharzes (B) mit einer zahlenmittleren Molmasse im Bereich zwischen 200 Da und 10 kDa; und
- (γ) 0,01 bis 3 % (w/w) eines Vernetzungskatalysators (C).

**2.** Klebstoffzusammensetzung nach Anspruch 1, **dadurch gekennzeichnet, dass** das Polymer (A1) ein Polyether ist, der der Formel (I) entspricht, wobei m gleich 0 ist.

**3.** Klebstoffzusammensetzung nach einem der Ansprüche 1 oder 2, **dadurch gekennzeichnet, dass** das Polymer (A1) derart ist, dass:

- $R^4$ und $R^5$, gleich oder verschieden, jeweils für einen Methyl- oder Ethylrest stehen;
- $R^2$ ausgewählt ist aus den folgenden zweiwertigen Resten: Ethylen, Isopropylen, n-Propylen, n-Butylen, Ethylethylen.

**4.** Klebstoffzusammensetzung nach einem der Ansprüche 1 bis 3, **dadurch gekennzeichnet, dass** die Polymere der Formel (II) derart sind, dass die Hydroxylzahl OHZ des Polyesterdiols der Formel (IV), das dem zweiwertigen Polyesterrest $R^{10}$ entspricht, im Bereich zwischen 45 bis 55 mg KOH/g variiert.

**5.** Klebstoffzusammensetzung nach einem der Ansprüche 1 bis 4, **dadurch gekennzeichnet, dass** die Polymere der Formel (II) derart sind, dass die dimerisierte Fettsäure, von der der Rest $R^{12}$ abgeleitet ist, eine Säurezahl SZ im Bereich zwischen 194 und 198 mg KOH/g aufweist.

**6.** Klebstoffzusammensetzung nach einem der Ansprüche 1 bis 5, **dadurch gekennzeichnet, dass** die Polymere der Formel (II) derart sind, dass der dimerisierte Fettalkohol, von dem der Rest $R^{11}$ abgeleitet ist, eine Hydroxylzahl OHZ im Bereich zwischen 202 und 212 mg KOH/g aufweist.

**7.** Klebstoffzusammensetzung nach einem der Ansprüche 1 bis 6, **dadurch gekennzeichnet, dass** die Polymere der Formel (II) derart sind, dass der Rest $R^6$ ausgewählt ist aus einem der folgenden zweiwertigen Reste, wobei die nachfolgenden Formeln die 2 freien Valenzen erkennen lassen:

- a) dem von Isophoron abgeleiteten zweiwertigen Rest:

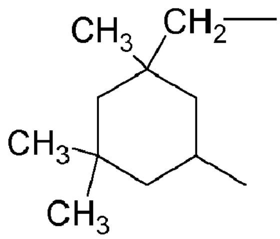

- b)

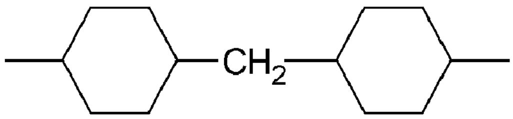

- c)

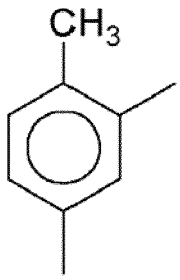

oder

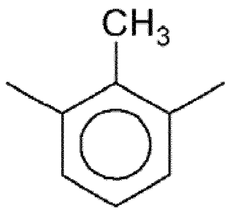

- d)

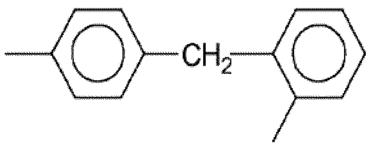

oder

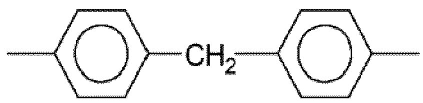

- e)

$-(CH_2)_6-$

(oder dem Hexamethylenrest).

**8.** Klebstoffzusammensetzung nach einem der Ansprüche 1 bis 7, **dadurch gekennzeichnet, dass** die Polymere der Formel (II) derart sind, dass der Rest $R^6$ der von Isophoron abgeleitete zweiwertige Rest ist.

**9.** Klebstoffzusammensetzung nach einem der Ansprüche 1 bis 8, **dadurch gekennzeichnet, dass** die Polymere der Formel (II) derart sind, dass:

- $R^7$ der zweiwertige Methylen- oder n-Propylenrest ist;
- $R^8$ und $R^9$ jeweils für den Methyl- oder Ethylrest stehen; und/oder
- q gleich 0 oder 1 ist.

**10.** Klebstoffzusammensetzung nach einem der Ansprüche 1 bis 9, **dadurch gekennzeichnet, dass** die Zusammensetzung (A) aus 10 bis 30 % (w/w) des Polymers (A1) und 70 bis 90 % (w/w) der Zusammensetzung (A2) besteht.

**11.** Klebstoffzusammensetzung nach einem der Ansprüche 1 bis 10, **dadurch gekennzeichnet, dass** das Klebrigmacherharz (B) aus den Folgenden ausgewählt ist:

- (iii) den Kolophoniumstoffen, die natürlichen Ursprungs oder modifiziert sind, wie zum Beispiel das aus Fichtengummi extrahierte Kolophonium, aus Baumwurzeln extrahiertes Holz-Kolophonium, und ihren hydrierten, dimerisierten, polymerisierten oder mit Monoalkoholen oder Polyolen, wie Glycerol, veresterten Derivaten; oder
- (v) Terpenharzen, die im Allgemeinen aus der Polymerisation von Terpenkohlenwasserstoffen, wie zum Beispiel Monoterpen (oder Pinen), in Gegenwart von Friedel-Crafts-Katalysatoren resultieren.

**12.** Klebstoffzusammensetzung nach einem der Ansprüche 1 bis 11, **dadurch gekennzeichnet, dass** sie Folgendes umfasst:

- ($\alpha$) 50 bis 55 % (w/w) der Zusammensetzung (A) aus Polymeren mit hydrolysierbaren Alkoxysilantermini,
- ($\beta$) 43 bis 48 % (w/w) Klebrigmacherharz (B) und
- ($\gamma$) 0,45 bis 2,5 % (w/w) Vernetzungskatalysator (C).

**13.** Klebstoffzusammensetzung nach einem der Ansprüche 1 bis 12, **dadurch gekennzeichnet, dass** ihre Brookfield-Viskosität, gemessen bei 100 °C, im Bereich zwischen 10 und 100 Pa.s liegt.

**14.** Selbstklebeträger, der mittels des Verfahrens erhalten werden kann, das Folgendes umfasst:

- (a) Vorheizen der Klebstoffzusammensetzung gemäß der Begriffsbestimmung in einem der Ansprüche 1 bis 13 auf eine Temperatur im Bereich von 50 bis 130 °C, und dann
- (b) schichtförmiges Aufbringen derselben auf eine Trägerschicht, und dann
- (c) Vernetzen derselben, durch Erwärmen des auf diese Weise beschichteten Trägers, auf eine Temperatur im Bereich von 50 bis 150 °C.

**15.** Verwendung des Selbstklebeträgers gemäß der Begriffsbestimmung in Anspruch 14 zur Herstellung von einseitigen oder beidseitigen selbstklebenden Etiketten und/oder Bändern.

## Claims

**1.** Heat-curable adhesive composition comprising:

- ($\alpha$) from 47% to 60% weight/weight of a composition (A) comprising polymers bearing hydrolysable alkoxysilane end groups, the said composition (A) consisting of:

  - from 10% to 50% weight/weight of a polymer (A1) of formula (I):

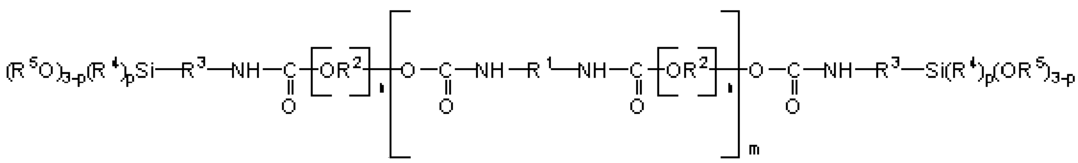

(I)

in which:

- $R^1$ represents a divalent hydrocarbon-based radical comprising from 5 to 15 carbon atoms, which

may be aromatic or aliphatic, and linear, branched or cyclic;
- $R^2$ represents a linear or branched divalent alkylene radical comprising from 1 to 4 carbon atoms;
- $R^3$ represents a linear divalent alkylene radical comprising from 1 to 3 carbon atoms;
- $R^4$ and $R^5$, which may be identical or different, each represent a linear or branched alkyl radical of 1 to 4 carbon atoms, with the possibility, when there are several radicals $R^4$ (or $R^5$), of them being identical or different;
- n is an integer such that the number-average molar mass of the polyether block of formula $-[OR^2]_n-$ is between 300 Da and 30 kDa;
- m is either equal to 0 or a non-zero integer such that the number-average molar mass of the polymer of formula (I) is between 600 Da and 60 kDa;
- p is an integer equal to 0, 1 or 2; and

- from 50% to 90% weight/weight of a composition (A2) comprising at least 85% weight/weight of polyurethanes bearing hydrolysable alkoxysilane end groups of formula (II):

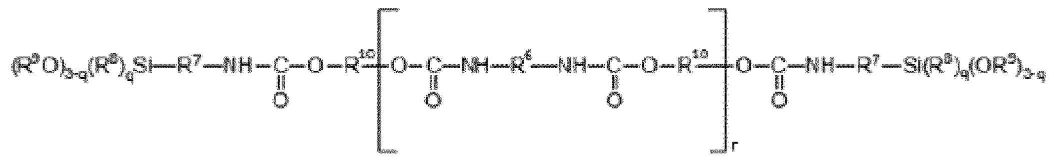

(II)

in which:

- $R^6$ represents a divalent hydrocarbon-based radical comprising from 5 to 15 carbon atoms, which may be aromatic or aliphatic, and linear, branched or cyclic;
- $R^7$ represents a linear divalent alkylene radical comprising from 1 to 3 carbon atoms;
- $R^8$ and $R^9$, which may be identical or different, each represent a linear or branched alkyl radical of 1 to 4 carbon atoms, with the possibility, when there are several radicals $R^8$ (or $R^9$), of them being identical or different;

- q is an integer equal to 0, 1 or 2;
- r is a number such that the number-average molar mass of the polymers of formula (II) is between 900 Da and 11 kDa;

- $R^{10}$ represents a divalent polyester block of formula (III) :

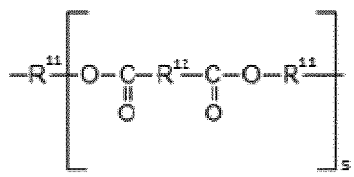

(III)

in which:

- $R^{11}$ represents a divalent hydrocarbon-based radical which is derived from a dimerized fatty alcohol by replacement of each of the two hydroxyl groups with a free valency, the said alcohol having a hydroxyl number $I_{OH}$ of between 200 and 220 mg KOH/g;
- $R^{12}$ represents a divalent hydrocarbon-based radical which is derived from a dimerized fatty acid by replacement of each of the two carboxyl groups -COOH with a free valency, the said acid having an acid number $I_A$ of between 190 and 200 mg KOH/g;

- s is a number such that the polyester diol of formula IV:

$OH-R^{10}-OH$ (IV)

has a hydroxyl number $I_{OH}$ of between 40 and 60 mg KOH/g;

- (β) from 37% to 50% weight/weight of a compatible tackifying resin (B) with a number-average molar mass of between 200 Da and 10 kDa; and
- (y) from 0.01% to 3% weight/weight of a crosslinking catalyst (C).

2. Adhesive composition according to Claim 1, **characterized in that** polymer (A1) is a polyether, corresponding to formula (I) in which m equals 0.

3. Adhesive composition according to either of Claims 1 and 2, **characterized in that** polymer (A1) is such that:

- $R^4$ and $R^5$, which may be identical or different, each represent a methyl or ethyl radical;
- $R^2$ is chosen from the following divalent radicals: ethylene, isopropylene, n-propylene, n-butylene, ethylethylene.

4. Adhesive composition according to one of Claims 1 to 3, **characterized in that** the polymers of formula (II) are such that the hydroxyl number $I_{OH}$ of the polyester diol of formula (IV) corresponding to the divalent polyester radical $R^{10}$ varies within a range from 45 to 55 mg KOH/g.

5. Adhesive composition according to one of Claims 1 to 4, **characterized in that** the polymers of formula (II) are such that the dimerized fatty acid from which the radical $R^{12}$ is derived has an acid number $I_A$ of between 194 and 198 mg KOH/g.

6. Adhesive composition according to one of Claims 1 to 5, **characterized in that** the polymers of formula (II) are such that the dimerized fatty alcohol from which the radical $R^{11}$ is derived has a hydroxyl number $I_{OH}$ of between 202 and 212 mg KOH/g.

7. Adhesive composition according to one of Claims 1 to 6, **characterized in that** the polymers of formula (II) are such that the radical $R^6$ is chosen from the following divalent radicals for which the formulae below reveal the two free valencies:

- a) the divalent radical derived from isophorone:

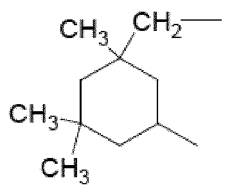

- b)

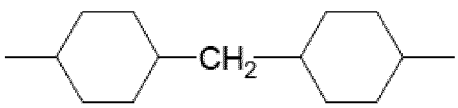

- c)

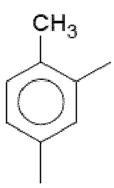

or

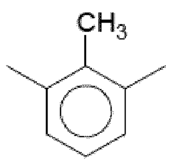

- d)

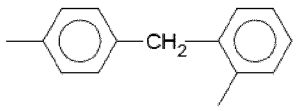

or

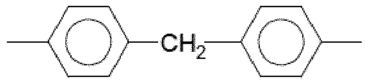

- e)

$-(CH_2)_6-$

(or hexamethylene radical).

**8.** Adhesive composition according to one of Claims 1 to 7, **characterized in that** the polymers of formula (II) are such that the radical $R^6$ is the divalent radical derived from isophorone.

**9.** Adhesive composition according to one of Claims 1 to 8, **characterized in that** the polymers of formula (II) are such that:

- $R^7$ is the divalent methylene or n-propylene radical;
- $R^8$ and $R^9$ each represent a methyl or ethyl radical; and/or
- q equals 0 or 1.

**10.** Adhesive composition according to one of Claims 1 to 9, **characterized in that** composition (A) consists of from 10% to 30% weight/weight of polymer (A1) and from 70% to 90% weight/weight of composition (A2).

**11.** Adhesive composition according to one of Claims 1 to 10, **characterized in that** the tackifying resin (B) is chosen from:

- (iii) rosins of natural or modified origin, for instance rosin extracted from pine gum, wood rosin extracted from tree roots and hydrogenated, dimerized or polymerized derivatives thereof or derivatives esterified with monoalcohols or polyols, such as glycerol; or
- (v) terpenic resins, generally resulting from the polymerization of terpenic hydrocarbons, for instance monoterpene (or pinene) in the presence of Friedel-Crafts catalysts.

**12.** Adhesive composition according to one of Claims 1 to 11, **characterized in that** it comprises:

- ($\alpha$) from 50% to 55% weight/weight of composition (A) of polymers bearing hydrolysable alkoxysilane end groups,
- ($\beta$) from 43% to 48% weight/weight of tackifying resin (B), and
- (y) from 0.45% to 2.5% weight/weight of crosslinking catalyst (C).

**13.** Adhesive composition according to one of Claims 1 to 12, **characterized in that** its Brookfield viscosity measured at 100°C is between 10 and 100 Pa.s.

**14.** Self-adhesive support that may be obtained via the process comprising:

- (a) preheating to a temperature of between 50 and 130°C the adhesive composition as defined in one of Claims 1 to 13, and then
- (b) coating it onto a support layer, and then
- (c) curing it, by heating the support thus coated to a temperature of between 50 and 150°C.

**15.** Use of the self-adhesive support as defined in Claim 14 for the manufacture of one-sided or two-sided self-adhesive labels and/or tapes.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 09106699 A
- EP 2336208 A
- WO 2009106699 A


### Littérature non-brevet citée dans la description


- FINAT. Manuel Technique FINAT, 2001